# EUROPEAN PATENT APPLICATION

(11) **EP 3 822 556 A1**
(43) Date of publication of application: **19.05.2021**
(21) Application number: 20207373.0
(22) Date of filing: 13.11.2020
(51) Int. Cl.: F24H 4/02, F25B 29/00, F24F 1/24, F24F 3/06, F24F 5/00

(54) **AIR WATER-COOLED CONDITIONING APPARATUS AND PLANT USING THE APPARATUS**

(30) Priority: 15.11.2019 CN 201921984411 U
(71) Applicant: Tekno Point Italia S.r.l., 30020 Marcon (VE) (IT); Zhuhai Vino Environmental Technology Equipment Co., Ltd., Zhuai, Guangdong 519000 (CN)
(72) Inventor: DING, Fei, Zhuai, Guangdong 519000 (CN); MO, Peishan, Zhuai, Guangdong 519000 (CN); XIAO, Youyuan, Zhuai, Guangdong 519000 (CN); CHEN, Hongtao, Zhuai, Guangdong 519000 (CN); BOLGAN, Fulvio, 30020 MARCON (VE) (IT); MANTOVAN, Thomas, 30020 MARCON (VE) (IT)
(74) Representative: Piovesana, Paolo

(57) **Abstract**

Water-cooled air conditioning apparatus, with a water-cooled heat exchange circuit (A), with a heat exchange circuit with refrigerant gas (B) and with a water - refrigerant gas heat exchanger (4), in which the heat exchange between the fluids circulating in the two circuits takes place, characterized by the fact that:
- the water-cooled heat exchange circuit (A) comprises means for connection to an external source of water (1), a duct (3) connecting said external source (1) with a water inlet (42) of said water - refrigerant gas heat exchanger (4), a discharge duct (5) of said water from an outlet (40) of said water-refrigerant gas heat exchanger (4) and a proportional valve (8) configured to adjust the flow of water in said water-cooled heat exchange circuit (a) as a function of the performance required by the plant,
- the circuit of heat exchange of gas refrigerant (B) comprises a compressor (9) with a frequency converter module, a heat sink (11) of said frequency converter module, at least one regulation/shut-off set comprising an electronic expansion valve (12) and a shut-off valve (13) in a liquid line, and a shut-off valve (14) in a gas line, and connections for connecting an indoor unit (16), which is inserted between said shut-off valve (13) in the liquid line and said shut-off valve (14) in the gas line and is configured to cool/heat the air of the environment in which it is installed,
- at least one gas-liquid separator (15) with the outlet connected with the inlet of said compressor (9),
- a four-way valve (10) having a first port (a) connected with the outlet of said compressor (9), a second port (b) connected with the gas side of said water-refrigerant gas heat exchanger (4), a third port (c) connected to the inlet of said gas-liquid separator (15) and a fourth port (d) connected to said shut-off valve (14) of the gas line of said at least one regulation/shut-off set, and is intended to assume two different configurations depending on whether the apparatus operates in cooling mode or in heating mode and, more specifically, when the apparatus operates in cooling mode, said four-way valve (10) is configured so that inside, the first door (a) communicates with the second door (b) and the fourth door (d) communicates with the third door (c), while when the apparatus operates in heating mode, the four-way valve (10) is configured so that the first door (a) inside communicates with the fourth door (d) and the second door (b) communicates with the third door (c).

## Description

The present invention relates to an air water-cooled conditioning apparatus and a plant that uses the apparatus.

With the advancement of society and the development of science and technology, air conditioners are increasingly used in homes and public places to create a comfortable living environment. Places such as homes, hotels, office buildings and shopping centers increasingly use centralized water-cooled air conditioning systems, which use water as a cooling fluid and are equipped with heat exchange equipment consisting of chillers, coolers, air conditioning equipment and other major components. Homes, small hotels and small shopping centers generally adopt air-cooled climate control systems, which are neither energy efficient nor environmentally friendly and whose operating costs can be high. However, the known centralized water-cooled air-conditioning systems use a fixed flow of water and/or are equipped with pumps with a fixed flow rate. During the normal operation of these air conditioning systems, the water consumption is very high and the excess water is discharged into the drainage systems.

This entails firstly a high-energy consumption by the pumps and secondly it does not allow the air conditioning units to reach maximum performance.

Furthermore, the construction of traditional water-cooled air conditioning systems have other drawbacks, such as high costs of the equipment, high installation costs and large installation spaces.

The object of the invention is to propose a water-cooled air conditioning apparatus which can be used in particular in homes, small hotels and small shopping centers and which entails reduced installation costs.

Another object of the invention is to propose a water-cooled air conditioning apparatus, which involves reduced operating costs.

Another object of the invention is to propose a water-cooled air conditioning apparatus, which has a high-energy efficiency.

Another object of the invention is to propose a water-cooled air conditioning apparatus that is environmentally friendly.

Another object of the invention is to propose an air conditioning plant, which uses this particular water-cooled air conditioning apparatus.

All these objects and others that will result from the following description are achieved, according to the invention with a water-cooled air conditioning apparatus as defined in claim 1 and with an air conditioning plant as defined in claim 12.

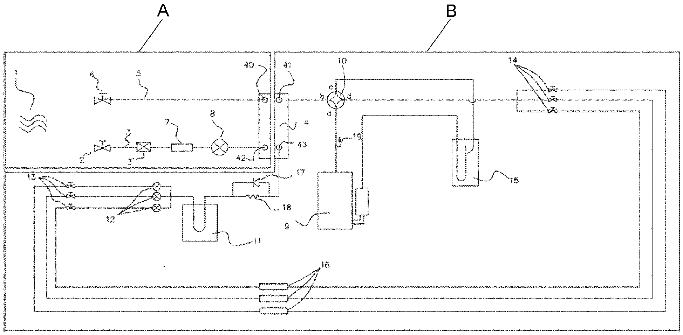

The present invention is further clarified hereinafter in some of its preferred embodiments reported for purely illustrative and non-limiting purposes with reference to the attached drawing table showing a simplified general scheme of an air conditioning plant that uses an air conditioning apparatus according to the invention.

As can be seen from the figures, the air to water-cooled conditioning plant according to the invention comprises a water heat exchange circuit and generally designated by A and a heat exchange circuit for the refrigerant, generally designated by B.

The water-cooled heat exchange circuit A comprises a water supply circuit from an external source 1, a water inlet shut-off valve 2, a water inlet duct 3, a water- refrigerant gas plate heat exchanger 4, a water outlet duct 5 and a water outlet shut-off valve 6.

In the example illustrated, the heat exchanger 4 is arranged vertically and has its upper part provided with a water outlet 40 and an attachment 41 for the refrigerant gas circuit, while its lower part is provided with an inlet 42 for water and a connection 43 for the refrigerant gas circuit.

The external water source 1 is connected with the water inlet 42 at the bottom of the plate heat exchanger 4 through the water inlet duct 3, while the water outlet 40 at the top of the plate heat exchanger 4 is connected to the outlet of the water supply circuit through the water outlet duct 5.

A flow switch 3' is also provided in the water circuit, to verify the presence of water flow in the heat exchanger 4 and to generate an alarm signal in the event of a detected absence of water in the water circuit; in addition, a proportional valve 8 regulating the water flow rate is also provided in the water circuit for controlling the flow of water in the plate heat exchanger 4, as well as a pressure stabilizing valve 7 for the water entering the exchanger.

In the diagram shown, the proportional valve 8 is placed in the inlet branch 3 of the water-cooled heat exchange circuit A, but the invention also provides that it can be placed in the outlet branch 5 in order to increase the thermal efficiency of the heat exchanger.

The refrigerant circuit B comprises a variable frequency compressor 9, a four-way valve 10, a heat sink 11 of the variable frequency converter module (inverter board) which manages said compressor 8, a gas-liquid separator 15, connected with the input of the variable frequency compressor 9, a high pressure switch 19, positioned at the output of the variable frequency compressor 9, and a plurality of regulation/shut-off sets. The pressure switch 19 has a safety function in the sense that it intervenes when the pressure of the refrigerant gas at the outlet of the compressor 9 exceeds a predetermined pressure value, for example 42 bar.

Each of these regulation/shut-off sets comprises an electronic expansion valve 12, a liquid line shut-off valve 13 and a gas line shut-off valve 14. Furthermore, in each regulation/shut-off set there are connections for the connection pipes to corresponding indoor units 16 for cooling or heating the rooms to be air-conditioned. These connections (not shown in the drawings) are arranged between each shut-off valve 13 of the liquid line and the corresponding shut-off valve 14 of the gas line.

A non-return valve 17 and a capillary tube 18 are connected in parallel between the refrigerant outlet 43 located on the lower part of the plate heat exchanger 4 and the heat sink 11 of the variable frequency converter module to allow the cooling of the drive module 11 in both modes of operation, as detailed below.

The air conditioning apparatus according to the invention also comprises a four-way valve 10 with a first port "a" connected to the output of the variable frequency compressor 9, with a second port "b" connected to the refrigerant gas connection 41 in the plate heat exchanger 4, with a third port "c" connected to the inlet of the gas-liquid separator 15 and with a fourth port "d" connected to the shut-off valves 14 of the gas line.

During operation of the apparatus, the water coming from the external source 1 passes through the shut-off valve 2 and the inlet duct 3, enters the flow switch 3', then passes through the pressure stabilizing valve 7 and the proportional valve 8, enters the plate heat exchanger 4 through the lower water inlet 42 to exchange heat with the refrigerant in the exchanger itself, then exits through the upper water outlet 40, passes through the shut-off valve 6 and is discharged to the outside.

The proportional valve 8, which is directly controlled in a traditional way by the apparatus management card, has the function of accurately controlling the water flow based on the number of active regulation/shut-off sets and therefore of indoor units 16 connected and active, so as to adapt the quantity of water entering the plate exchanger 4 to regime of the entire plant.

When the apparatus works in cooling mode, the superheated refrigerant gas at high temperature and high pressure, exits from the variable frequency compressor 9, it enters the port "a" of the four-way valve 10 and is then discharged from the port "b" of the valve itself. It then enters the plate heat exchanger 4 through the upper refrigerant connection 41, is cooled and transformed into a super cooled liquid at high pressure and medium temperature, which is discharged from the bottom of the plate heat exchanger 4 through the lower coolant port 43. It then passes through the non-return valve 17 and enters the heat sink of the variable frequency converter module 11 before reaching the electronic expansion valves 12. In this way the cooled liquid passes into the heat sink of the variable frequency converter module 11 causes the dissipation of the heat generated by the variable frequency converter module 11, always guaranteeing its cooling and therefore its high reliability. At the same time, the refrigerant enters at least one indoor unit 16 passing through the corresponding electronic expansion valve 12 and the corresponding liquid line shut-off valve 13 and after absorbing heat from the internal air of the environment to be cooled, it passes through the corresponding shut-off valve on the gas line 14, it enters port "d" of the four-way valve 10 and then exits through port "c", passes through the gas-liquid separator 15 and returns to the variable frequency compressor 9.

The number of regulation/shut-off sets, each comprising an electronic expansion valve 12, a liquid line shut-off valve 13 and a gas line shut-off valve 14, is linked to the characteristics and potential of the plant. In the illustrated embodiment example, three regulation/shut-off sets are provided, but in general, the number of sets can vary and preferably varies from one to five.

When the apparatus works in heating mode, the superheated high temperature and high pressure refrigerant gas coming out of the variable frequency compressor 9 enters port "a" of the four-way valve 10 and is discharged from port "d" of the valve itself. It then enters at least one indoor unit 16 passing through the corresponding shut-off valve of the gas line 14. In the indoor unit 16, the gas becomes super-cooled liquid at high pressure and medium temperature, releasing the heat to the internal air of the room to be heated.

The refrigerant in the liquid state then enters the apparatus according to the invention through the corresponding shut-off valve 13 of the liquid line, passes through the duct coming from the electronic expansion valve 12, passes through the heat sink of the variable frequency converter module 11 to cool it, then passes through the capillary tube 18 for secondary lamination and enters the plate heat exchanger 4 through the lower coolant port 43 to evaporate and absorb heat.

The evaporated gaseous refrigerant is discharged through the upper refrigerant port 41 of the plate heat exchanger 4, then enters the port "b" of the four-way valve 10 and is discharged from the port "c" of the four-way valve 10, to return to the variable frequency compressor 9 by first crossing the gas-liquid separator 15.

The apparatus according to the invention manages two types of interconnected heat exchange, namely, the cooling of the refrigerant gas through the water and the cooling of the ambient air through the refrigerant gas. It combines the use of the flow switch 3' for checking the presence of water flow in the hydraulic circuit with the use of the proportional water flow control valve 8, which accurately regulates the flow of water to the plate heat exchanger 4 according to the number of active indoor units 16, so as to meet the heat exchange capacity requirements of the indoor units 16 and prevent overpressure in the refrigerant heat exchange plant. When the number of groups of active indoor units 16 decreases, the flow of water passing through the water inlet duct 3 is consequently reduced by the proportional valve 8 regulating the water flow rate, so as to prevent the flow of the plant water from exceeding and therefore there is a wasting a large amount of water.

The apparatus according to the invention combines the use of pipes passing through the plate heat exchanger 4, necessary for the heat exchange, with the heat dissipation of the variable frequency converter module 11; at the same time, a capillary tube 18 and a non-return valve 17 are provided to allow cooling of the frequency converter module in both modes of operation.

The plate heat exchanger 4 can also be replaced with a double tube heat exchanger or a shell and tube heat exchanger. In addition, the variable frequency compressor 9 can be replaced with a fixed frequency compressor and the corresponding variable frequency converter module 11 can be replaced with a fixed frequency converter module to improve the plant efficiency according to the needs of the conditions of work.

## Claims

1. Water-cooled air conditioning apparatus, with a water-cooled heat exchange circuit (A), with a heat exchange circuit with refrigerant gas (B) and with a water - refrigerant gas heat exchanger (4), in which the heat exchange between the fluids circulating in the two circuits takes place, **characterized by** the fact that:
- the water-cooled heat exchange circuit (A) comprises means for connection to an external source of water (1), a duct (3) connecting said external source (1) with a water inlet (42) of said water - refrigerant gas heat exchanger (4), a discharge duct (5) of said water from an outlet (40) of said water-refrigerant gas heat exchanger (4) and a proportional valve (8) configured to adjust the flow of water in said water-cooled heat exchange circuit (a) as a function of the performance required by the plant,
- the circuit of heat exchange of gas refrigerant (B) comprises a compressor (9) with a frequency converter module, a heat sink (11) of said frequency converter module, at least one regulation/shut-off set comprising an electronic expansion valve (12) and a shut-off valve (13) in a liquid line, and a shut-off valve (14) in a gas line, and connections for connecting an indoor unit (16), which is inserted between said shut-off valve (13) in the liquid line and said shut-off valve (14) in the gas line and is configured to cool/heat the air of the environment in which it is installed,
- at least one gas-liquid separator (15) with the outlet connected with the inlet of said compressor (9),
- a four-way valve (10) having a first port (a) connected with the outlet of said compressor (9), a second port (b) connected with the gas side of said water-refrigerant gas heat exchanger (4), a third port (c) connected to the inlet of said gas-liquid separator (15) and a fourth port (d) connected to said shut-off valve (14) of the gas line of said at least one regulation/shut-off set, and is intended to assume two different configurations depending on whether the apparatus operates in cooling mode or in heating mode and, more specifically, when the apparatus operates in cooling mode, said four-way valve (10) is configured so that inside, the first door (a) communicates with the second door (b) and the fourth door (d) communicates with the third door (c), while when the apparatus operates in heating mode, the four-way valve (10) is configured so that the first door (a) inside communicates with the fourth door (d) and the second door (b) communicates with the third door (c).

2. Apparatus according to claim 1 **characterized in that** said compressor (9) is of the variable frequency type and said frequency converter module is a variable frequency converter module.

3. Apparatus according to one or more of the preceding claims **characterized in that** said water-cooled heat exchange circuit comprises an inlet shut-off valve (2) and/or an outlet shut-off valve (6).

4. Apparatus according to one or more of the preceding claims **characterized in that** said water - refrigerant gas heat exchanger (4) is of the plate type.

5. Apparatus according to one or more of the preceding claims **characterized in that** said water - refrigerant gas heat exchanger (4) comprises in the lower part a water inlet (42) and in the upper part a water outlet (40).

6. Apparatus according to one or more of the preceding claims **characterized in that** in its operation in cooling mode said water - refrigerant gas heat exchanger (4) comprises in the upper part an inlet (41) for the refrigerant gas and in the lower part an outlet (43) of the refrigerant gas.

7. Apparatus according to one or more of the preceding claims **characterized in that** at least one non-return valve (17) is interposed between said water - refrigerant gas heat exchanger (4) and said heat sink (11) of said frequency converter module connected in parallel with at least one capillary tube (18) and that when the apparatus operates in cooling mode the super-cooled refrigerant liquid coming out of said water - refrigerant gas heat exchanger (4) passes through said non-return valve (17) first entering said heat sink (11) and being started in said at least one regulation/shut-off set before re-entering said water - refrigerant gas exchanger (4) after passing through said four-way valve (10), through said gas-liquid separator (15) and said compressor (9), while when the apparatus operates in heating mode the superheated gas coming out of the fourth door (d) of the four-way valve (10), passes through the shut-off valve (14) of the gas line of said at least one regulation/shut-off set, then through the corresponding indoor unit (16), where it is transformed into super cooled liquid at high pressure and medium temperature, then through the corresponding shut-off valve (13) and the corresponding electronic expansion valve (12) of the liquid line, then through said heat sink (11) of said frequency converter module and subsequently through said capillary tube (18) before re-entering the water - refrigerant gas heat exchanger (4).

8. Apparatus according to one or more of the preceding claims **characterized in that** in the water-cooled heat exchange circuit (A), which goes from the water source (1) to the drain after passing through said water-refrigerant gas heat exchanger (4) at least one water pressure stabilizer valve (7) is provided.

9. Apparatus according to one or more of the preceding claims **characterized in that** at least one flow switch (3') is inserted in the water-cooled heat exchange circuit, which goes from the water source (1) to the drain.

10. Apparatus according to claim 9 **characterized in that** said flow switch (3') is interposed between said inlet shut-off valve (2) and said water - refrigerant gas heat exchanger (4).

11. Apparatus according to one or more of the preceding claims **characterized in that** it comprises a high-pressure switch (19) downstream of said compressor (9).

12. Water-cooled air conditioning plant **characterized in that** it comprises an air conditioning apparatus according to one or more of the preceding claims and at least one unit (16) inserted in said at least one regulation/shut-off set between the corresponding shut-off valve (13) of a liquid line and the corresponding shut-off valve (14) of a gas line.

13. Plant according to claim 12 **characterized in that** it comprises a water-cooled heat exchange circuit (A), a heat exchange circuit with refrigerant gas (B) and a water-refrigerant gas plate heat exchanger (4), in which the heat exchange between the two circuits takes place, said heat exchanger being arranged vertically and having a lower water inlet (42), an upper water outlet (40) and two connections for the refrigerant gas, one upper (41) and a lower one (43), said plant being further **characterized by** the fact that:
- the water-cooled heat exchange circuit (A) comprises an external water source (1), an inlet shut-off valve (2) and/or water outlet (6) and a proportional valve (8) configured to regulate the flow of water in said water-cooled heat exchange circuit (A) according to the performance required by the plant,
- the thermal exchange of the refrigerant gas (B) comprises a compressor (9) with a frequency converter module, a heat sink (11) of said frequency converter module, at least one regulation/shut-off set with an electronic expansion valve (12) and a shut-off valve (13) in the liquid line, an shut-off valve (14) in the gas line, and an indoor unit (16), inserted between said shut-off valve (13) of the liquid line and said shut-off valve (14) of the gas line and is configured to cool/heat the air of the environment in which it is installed,
- a four-way valve (10) is provided with a first port (a), which is connected with the outlet of said compressor (9), with a second door (b), which is connected with the upper connection (41) of said plate heat exchanger (4) for gas, with a third door (c), which is connected with the inlet of a gas-liquid separator (15), and with a fourth door (d), which is connected with said shut-off valve (14) of the gas line of said at least one regulation/shut-off set, said four-way valve (10) being designed to assume two different configurations depending on whether the plant operates in cooling or heating mode, and more specifically, when the plant operates in cooling mode, said four-way valve (10) is configured so that the first door (a) inside communicates with the second door (b), to send the superheated refrigerant gas at high temperature and high pressure, which comes out of the variable frequency compressor (9), to the upper connection (41) of said water - refrigerant gas plate exchanger (4), so that from lower connection (43) of said exchanger (4) a super-cooled refrigerant liquid at high pressure and medium temperature exits, which passes through said heat sink (11) and then the electronic expansion valve (12) and the liquid line shut-off valve (13), the indoor unit (16) and the gas shut-off valve (14) of said at least one regulation/shut-off set, enters the fourth port (d) and exits through the third door (c) to enter the gas-liquid separator (15) and from there into the compressor (9), while when the plant operates in heating mode, said four-way valve (10) is configured so that inside the first door (a) communicates with the fourth door (d) to send the superheated gas at high temperature and high pressure, which comes out of the compressor (9), in said at least one regulation/shut-off set passing through the corresponding shut-off valve (14) of the gas line, the corresponding indoor unit (16), the corresponding shut-off valves (13) and electronic expansion (12), and subsequently through the sink (11) of said frequency converter module and then through the capillary tube (18) before entering the plate heat exchanger (4) through the lower gas connection (43) and exiting through the upper connection (41) and finally re-entering from here, through ports (b) and (c) of the four-way valve (10), in the compressor (9).

14. Plant according to claim 13 **characterized in that** said proportional valve (8) is placed in the water inlet pipe (3), upstream of said water - refrigerant gas plate heat exchanger (4).

15. Plant according to one or more of the preceding claims **characterized in that** said compressor (9) is of the variable frequency type and is managed by a variable frequency converter module.
